# EUROPEAN PATENT SPECIFICATION

(11) **EP 2 266 729 B1**
(45) Date of publication and mention of the grant of the patent: **03.10.2012**
(21) Application number: 10155779.1
(22) Date of filing: 09.08.2006
(51) Int. Cl.: B22F 9/28, C23C 16/06, B22F 9/30

(54) **Production of chain agglomerations of nano-scale metal particles**
Herstellung von Ketten-Agglomerierungen von Nano-Metallpartikeln
Production d'agglomérations en chaîne de particules métalliques nanoscopiques

(30) Priority: 10.08.2005 US 201368; 10.08.2005 US 200952; 06.08.2006 US 462713
(43) Date of publication of application: 29.12.2010
(62) Divisional of application: 06851271.4
(73) Proprietor: Directa Plus S.p.A., 22074 Lomazzo (CO) (IT)
(72) Inventor: Mercuri, Robert A., Seven Hills, OH 44131 (US)
(74) Representative: Cremer, Christian

(56) References cited:
- RU-C1- 2 161 549
- US-A- 2 900 245
- US-A- 3 075 494
- US-A- 3 158 499
- US-A- 3 955 962
- US-A- 3 998 758
- HUH S H ET AL: "A design of a nanometer size metal particle generator: Thermal decomposition of metal carbonyls", REVIEW OF SCIENTIFIC INSTRUMENTS, AIP, MELVILLE, NY, US, vol. 70, no. 11, 1 November 1999 (1999-11-01), pages 4366-4369, XP012037195, ISSN: 0034-6748

## Description

### Technical Field

The present invention relates to a process and an apparatus for the production of chain agglomerations of nano-scale metal particles useful for catalysis and other applications. By the practice of the present invention, chain agglomerations of nano-scale metal particles can be produced and collected with greater speed, precision and flexibility than can be accomplished with conventional processing. Thus, the invention provides a practical and cost-effective system for preparing such chain agglomerations of nano-scale metal particles.

### Background Art

Catatysts are becoming ubiquitous in modem chemical processing. Catalysts are used in the production of materials such as fuels, lubricants, refrigerants, polymers, drugs, etc., as well as playing a role in water and air pollution mediation processes. Indeed, catalysts have been ascribed as having a role in fully one third of the material gross national product of the United States, as discussed by Alexis T. Bell in "The Impact of Nanoscience on Heterogeneous Catalysis" (Science, Vol. 299, pg. 1688, 14 March 2003).

Generally speaking, catalysts can be described as small particles deposited on high surface area solids. Traditionally, catalyst particles can range from the sub-micron up to tens of microns. One example described by Bell is the catalytic converter of automobiles, which consist of a honeycomb whose walls are coated with a thin coating of porous aluminum oxide (alumina). In the production of the internal components of catalytic converters, an aluminum oxide wash coat is impregnated with nanoparticles of a platinum group metal catalyst material. In fact, most industrial catalysts used today include platinum group metals especially platinum, rhodium and iridium or alkaline metals like cesium, at times in combination with other metals such as iron or nickel.

The size of these particles has been recognized as extremely significant in their catalytic function. Indeed it is also noted by Bell that the performance of a catalyst can be greatly affected by the particle size of the catalyst particles, since properties such as surface structure and the electronic properties of the particles can change as the size of the catalyst particles changes.

In his study on nanotechnology of catalysis presented at the Frontiers in Nanotechnology Conference on May 13, 2003, Eric M. Stuve of the Department of Chemical Engineering of the University of Washington, described how the general belief is that the advantage of use of nano-sized particles in catalysis is due to the fact that the available surface area of small particles is greater than that of larger particles, thus increasing effectiveness by providing more metal atoms at the surface to optimize catalysis using such nano-sized catalyst materials. However, Stuve points out that the advantages of the use of nano-sized catalyst particles may be more than simply due to the size effect. Rather, the use of nanoparticles can exhibit modified electronic structure and a different shape with actual facets being present in the nanoparticles, which provide for interactions which can facilitate catalysis. Indeed, Cynthia Friend, in "Catalysis On Surfaces" (Scientific American, April 1993, p. 74), posits catalyst shape, and, more specifically, the orientation of atoms on the surface of the catalyst particles, as important in catalysis. In addition, differing mass transport resistances may also improve catalyst function. Thus, the production of nano-sized metal particles for use as catalysts on a more flexible and commercially efficacious platform is being sought. Moreover, other applications for nano-scale particles are being sought, whether for the platinum group metals traditionally used for catalysis or other metal particles.

Conventionally, however, catalysts are prepared in two ways. One such process involves catalyst materials being deposited on the surface of carrier particles such as carbon blacks or other like materials, with the catalyst-loaded particles then themselves being loaded on the surface at which catalysis is desired. One example of this is in the fuel cell arena, where carbon black or other like particles loaded with platinum group metal catalysts are then themselves loaded at the membrane/electrode interface to catalyze the breakdown of molecular hydrogen into atomic hydrogen to utilize its component protons and electrons, with the resulting electrons passed through a circuit as the current generated by the fuel cell. One major drawback to the preparation of catalyst materials through loading on a carrier particle is in the amount of time the loading reactions take, which can be measured in hours in some cases.

To wit, in U.S. Patent 6,716,525, Yadav and Pfaffenbach describe the dispersing of nano-scale powders on coarser carrier powders in order to provide catalyst materials. The carrier particles of Yadav and Pfaffenbach include oxides, carbides, nitrides, borides, chalcogenides, metals and alloys. The nanoparticles dispersed on the carriers can be any of many different materials according to Yadav and Pfaffenbach, including precious metals such as platinum group metals, rare earth metals, the so-called semi-metals, as well as non-metallic materials, and even clusters such as fullerenes, alloys and nanotubes.

Alternatively, the second common method for preparing catalyst materials involves directly loading catalyst metals such as platinum group metals on a support without the use of carrier particles which can interfere with the catalytic reaction. For example, many automotive catalytic converters, as discussed above, have catalyst particles directly loaded on the aluminum oxide honeycomb which forms the converter structure. The processes needed for direct deposition of catalytic metals on support structures, however, are generally operated at extremes of temperature and/or pressures. For instance one such process is chemical sputtering at temperatures in excess of 1,500 °C and under conditions of high vacuum. Thus, these processes are difficult and expensive to operate.

In an attempt to provide nano-scale catalyst particles, Bert and Bianchini, in International Patent Application Publication No. WO 2004/036674, suggest a process using a templating resin to produce nano-scale particles for fuel cell applications. Even if technically feasible, however, the Bert and Bianchini methods require high temperatures (on the order of 300 °C to 800°C), and require several hours. Accordingly, these processes are of limited value.

Taking a different approach, Sumit Bhaduri, in "Catalysis With Platinum Carbonyl Clusters," Current Science, Vol. 78, No. 11, 10 June 2000, asserts that platinum carbonyl clusters, by which is meant polynuclear metal carbonyl complexes with three or more metal atoms, have potential as redox catalysts, although the Bhaduri publication acknowledges that the behavior of such carbonyl clusters as redox catalysts is not understood in a comprehensive manner. Indeed, metal carbonyls have been recognized for use in catalysis in other applications.

Metal carbonyls have also been used as, for instance, anti-knock compounds in unleaded gasolines. However, more significant uses of metal carbonyls are in the production and/or deposition of the metals present in the carbonyl, since metal carbonyls are generally viewed as easily decomposed and volatile resulting in deposition of the metal and carbon monoxide.

Generally speaking, carbonyls are transition metals combined with carbon monoxide and have the general formula Mₓ(CO)_{y}, where M is a metal in the zero oxidation state and where x and y are both integers. While many consider metal carbonyls to be coordination compounds, the nature of the metal to carbon bond leads some to classify them as organometallic compounds. In any event, the metal carbonyls have been used to prepare high purity metals, although not for the production of nano-scale metal particles. As noted, metal carbonyls have also been found useful for their catalytic properties such as for the synthesis of organic chemicals in gasoline antiknock formulations.

Different approaches for the production of metallic films for applications as catalysts on different substrates using thermal decomposition of metal carbonyls are discussed in the patents US 3 158 499 A (Jenkin), US 3 075 494 A (Toulmin), and US 3 998 758 A (Clyde), where the first patent discloses thermal decomposition using heating coils, and the other two patents disclose thermal decomposition by means of heating a substrate with infrared lamps.

A closed loop apparatus and process for the production of small metal particles is shown in US 2 900 245 A (Bélier), in particular in the figure of said patent. Using a circulating gas heater and a reactor heated by a heating medium, thermal decomposition of a metal carbonyl may be carried out under selected conditions of temperature, pressure and gas velocity. Metal particles in a dimension of micrometers can be produced in said closed loop process by starting off from respective metal carbonyls.

In accordance to the teachings of US 3 955 962 A (Dawihl), fibers of metal having a very large aspect ratio are grown in a magnetic field using metal carbonyls. Metal atoms agglomerate under the influence of the flux lines in parallel on a support.

The process disclosed in RU 2 161 549 C1 (Rjabko) is preferably used for the production of Ni-nanoparticles with controlled size in the range 0.5 µm to 5 µm, where control is obtained mainly by means of heat or temperature. This method uses thermal decomposition of Ni carbonyl diluted with the diluent gas carbon oxide from 10 up to 80 vol. % with addition of oxygen by 0,01 to 0,1 vol. %.

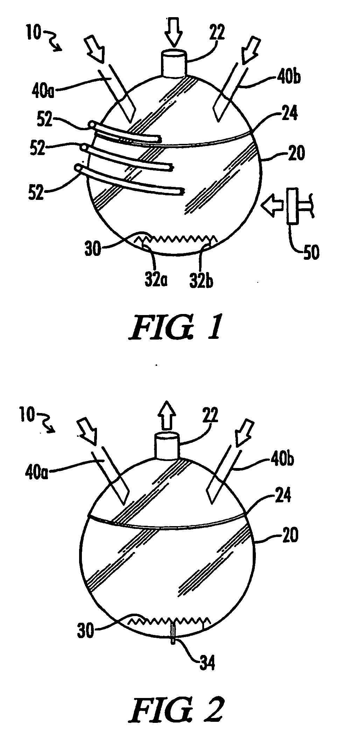

In the article by S. H. Huh et al., Rev. Sci. Inst. 70, Nr. 11, 4366 to 4369 (1999) an electrically heated filament is used to decompose metal carbonyls. And nanometer sized metal particles are collected fmm an experimental setup closed reactor with one gas feeder (S. H. Huh et al., figure 1). The article also describes formation of alloy nanometer sized particles from iron and molybdenum.

Accordingly, what is needed is a system and process for the production of metal particles for use as, e. g., catalyst materials. The desired system can be used for the preparation of chain agglomerations of nano-scale particles but, significantly, can also be used for the deposit or collection of chain agglomerations of nano-scale particles directly on a surface without the requirement for extremes in temperature and/or pressures.

### Disclosure of the Invention

A process according to claim 1 and an apparatus according to claim 10 for the production of chain agglomerations of nano-scale metal particles is presented. More preferably, the particles produced by the inventive system have an average diameter no greater than about 250 nm, most preferably no greater than about 20 nm.

Preferably, the particles produced are roughly spherical or isotropic, meaning they have an aspect ratio of about 1.4 or less, although particles having a higher aspect ratio can also be prepared and used as catalyst materials. The aspect ratio of a particle refers to the ratio of the largest dimension of the particle to the smallest dimension of the particle (thus, a perfect sphere has an aspect ratio of 1.0). The diameter of a particle is taken to be the average of all of the diameters of the particle, even in those cases where the aspect ratio of the particle is greater than 1.4.

While the production of individual nano-scale metal particles, or small clusters or spherical collections of nano-scale metal particles can be desirable, in an embodiment in accordance with the present invention, chain agglomerations of nano-scale metal particles are produced. These chain agglomerations comprise hundreds, or even thousands, of nano-scale metal particles organized in an elongate arrangement (as opposed to a spherical or cluster arrangement), and can appear to the naked eye as fibrous in nature. More particularly, each chain agglomeration of nano-scale metal particles has an aspect ratio, that is, ratio of major dimension (i.e., length) to minor dimension (i.e., width or diameter) of at least about 700:1, more advantageously at least about 900:1. As such, the surface area of the inventive nano-scale metal particle chain agglomerations makes the agglomerations uniquely effective in applications such as catalysis.

In the practice of the present invention, a decomposable metal-containing moiety is fed into a reactor vessel and sufficient energy to decompose the moiety applied, such that the moiety decomposes. The decomposable moiety used in the invention can be any decomposable metal-containing material, including an organometallic compound, a metal complex or a metal coordination compound, provided that the moiety can be decomposed to provide free metals under the conditions existing in the reactor vessel, such that the free metal can be deposited on a support or collected by a collector. One example of a suitable moiety for use in the invention is a metal carbonyl, such as nickel or iron carbonyls, or noble metal carbonyls.

The invention is advantageously practiced in an apparatus comprising a reactor vessel, at least one feeder for feeding or supplying the decomposable moiety into the reactor vessel, a support or collector which is operatively connected to the reactor vessel for deposit or collection, and a source of energy capable of decomposing the decomposable moiety. The source of energy should act on the decomposable moiety such that the moiety decomposes.

The reactor vessel can be formed of any material which can withstand the conditions under which the decomposition of the moiety occurs. Generally, where the reactor vessel is a closed system, that is, where it is not an open ended vessel permitting reactants to flow into and out of the vessel, the vessel can be under subatmospheric pressure, by which is meant pressures as low as about 333 hPa (250 millimeters (mm)). Indeed, the use of subatmospheric pressures, as low as about 1.33 hPa (1 mm) of pressure, can accelerate decomposition of the decomposable moiety and provide smaller nano-scale particles. However, nano-scale particles can be produced at generally atmospheric pressure, i. e.,1013 hPa (760 mm). Alternatively, there may be advantage in cycling the pressure, such as from sub-atmospheric to generally atmospheric or above, to encourage nano- deposits within the structure of the particles or supports. Of course, even in a so-called "closed system," there needs to be a valve or like system for relieving pressure build-up caused, for instance, by the generation of carbon monoxide (CO) or other by-products. Accordingly, the use of the expression "closed system" is meant to distinguish the system from a flow-through type of system as discussed hereinbelow.

When the reactor vessel is a "flow-through" reactor vessel, that is, a conduit through which the reactants flow while reacting, the flow of the reactants can be facilitated by drawing a partial vacuum on the conduit, although no lower than about 333 hPa (250 mm) is necessary in order to draw the reactants through the conduit towards the vacuum apparatus, or a flow of an inert gas such as nitrogen or argon can be pumped through the conduit to thus carry the reactants along the flow of the inert gas.

Indeed, the flow-through reactor vessel can be a fluidized bed reactor, where the reactants are borne through the reactor on a stream of a fluid.

The at least one feeder supplying the decomposable moiety into the reactor vessel can be any feeder sufficient for the purpose, such as an injector which carries the decomposable moiety along with a Jet of a gas such as an inert gas like argon or nitrogen, to thereby carry the decomposable moiety along the jet of gas through the injector nozzle and into the reactor vessel. The gas employed can be a reactant, like oxygen or ozone, rather than an inert gas. This type of feeder can be used whether the reactor vessel is a closed system or a flow-through reactor.

Supports useful in the practice of the invention can be any material on which nano-scale metal particles produced from decomposition of the decomposable moieties can be deposited. In a preferred embodiment, the support is the material on which the catalyst metal is ultimately destined such as the aluminum oxide honeycomb of a catalytic converter or catalytic converter components without the need for extremes of temperature and pressure required by sputtering and like techniques. Alternatively, a collector capable of collecting nano-scale metal particles, such as a cyclonic or centrifugal collector, can be employed.

The support or collector can be disposed within the reactor vessel (indeed this is required in a closed system and is practical in a flow-through reactor). However, in a flow-through reactor vessel, the flow of reactants can be directed at a support positioned outside the vessel, at its terminus, especially where the flow through the flow-through reactor vessel is created by a flow of an inert gas. Alternatively, in a flow-through reactor, the flow can be directed into a centrifugal or cyclonic collector.

The energy employed to decompose the decomposable moiety can be any form of energy capable of accomplishing this function. For instance, electromagnetic energy such as infrared, visible, or ultraviolet light of the appropriate wavelengths can be employed. Additionally, microwave and/or radio wave energy, or other forms of sonic energy can also be employed (example, a spark to initiate "explosive" decomposition assuming suitable moiety and pressure), provided the decomposable moiety is decomposed by the energy employed. Thus, microwave energy, at a frequency of about 2.4 gigahertz (GHz) or induction energy, at a frequency which can range from as low as about 180 hertz (Hz) up to as high as about 13 mega Hz can be employed. A skilled artisan would readily be able to determine the form of energy useful for decomposing the different types of decomposable moieties which can be employed.

One preferred form of energy which can be employed to decompose the decomposable moiety is heat energy supplied by, o. g., hoat lamps, radiant heat sources, or the like. Such heat can be especially useful for highly volatile moieties, such as metal carbonyls in transparent vessels. In such case, the temperatures needed are no greater than about 500 °C, and generally no greater than about 250 °C. Indeed, generally, temperatures no greater than about 200°C are needed to decompose the decomposable moiety.

Depending on the source of energy employed, the reactor vessel should be designed so as to not cause deposit of the nano-scale metal particles on the vessel itself (as opposed to the collector) as a result of the application of the source of energy. In other words, if the source of energy employed is heat, and the reactor vessel itself becomes heated to a temperature at or somewhat higher than the decomposition temperature of the decomposable moiety during the process of applying heat to the decomposable moiety to effect decomposition, then the decomposable moiety will decompose at the walls of the reactor vessel, thus coating the reactor vessel walls (one exception to this general rule occurs if the walls of the vessel are so hot that the decomposable moiety decomposes within the reactor vessel and not on the vessel walls, as discussed in more detail below).

One way to avoid this is to direct the energy directly at the collector. The support or collector is equipped with a source of heat itself, such as a resistance heater in or at a surface of the support or collector such that the support or collector is at the temperature needed for decomposition of the decomposable moiety and the reactor vessel itself is not at a temperature needed for decomposition of the decomposable moiety. Thus, decomposition occurs at the support or collector. The reactor vessel can be formed of a material which is relatively transparent to the source of energy, especially as compared to the support or collector.

Where chain agglomerations of nano-scale metal particles are sought, the source of heat is a resistance heater being a wire, disposed within the flow of decomposable moieties. The heated wire provides a point of contact for the decomposition of decomposable moieties to form nano-scale metal particles; additional decomposition then occurs on the previously formed particles, and continues as chains of nano-scale metal particles are formed from these initial particles produced on the wire. While the precise mechanism for this phenomenon is not fully understood, it is believed that decomposition of decomposable moieties to produce nano-scale metal particles occurs by conduction along the chain as it forms. In other words, nano-scale metal particles are formed on the wire, which then cause further decomposition of decomposable moieties thereon by heat conduction along the metal particles formed on the wire, and so on.

Especially in situations when the support or collector is disposed outside the reactor vessel when a flow-through reactor vessel is employed with a support or collector at its terminus (whether a solid substrate collector for depositing of nano-scale metal particles thereon or a cyclonic or like collector for collecting the nano-scale metal particles for a suitable container), the decomposition of the decomposable moiety occurs as the moiety is flowing through the flow-through reactor vessel and the reactor vessel should be transparent to the energy employed to decompose the decomposable moiety. Alternatively, whether or not the support or collector is inside the reactor vessel, or outside it, the reactor vessel can be maintained at a temperature below the temperature of decomposition of the decomposable moiety, where heat is the energy employed. One way in which the reactor vessel can be maintained below the decomposition temperatures of the moiety is through the use of a cooling medium like cooling coils or a cooling jacket. A cooling medium can maintain the walls of the reactor vessel below the decomposition temperatures of the decomposable moiety, yet permit heat to pass within the reactor vessel to heat the decomposable moiety and cause decomposition of the moiety.

In an alternative embodiment which is especially applicable where both the walls of the reactor vessel and the gases in the reactor vessel are generally equally susceptible to the heat energy applied (such as when both are relatively transparent), heating the walls of the reactor vessel, when the reactor vessel is a flow-through reactor vessel, to a temperature substantially higher than the decomposition temperature of the decomposable moiety can permit the reactor vessel walls to themselves act as the source of heat. In other words, the heat radiating from the reactor walls will heat the inner spaces of the reactor vessel to temperatures at least as high as the decomposition temperature of the decomposable moiety. Thus, the moiety decomposes before impacting the vessel walls, which is then carried along with the gas flow within the reactor vessel, especially where the gas velocity is enhanced by a vacuum. In order to heat the walls of the reactor vessel to a temperature sufficient to generate decomposition temperatures for the decomposable moiety within the reactor vessel, the walls of the reactor vessel are preferably heated to a temperature which is significantly higher than the temperature desired for decomposition of the decomposable moiety(ies) being fed into the reactor vessel, which can be the decomposition those temperature of the decomposable moiety having the highest decomposition temperature of being fed into the reactor vessel, or a temperature selected to achieve a desired decomposition rate for the moieties present. For instance, if the decomposable moiety having the highest decomposition temperature of those being fed into the reactor vessel is nickel carbonyl, having a decomposition temperature of about 50°C, then the walls of the reactor vessel should preferably be heated to a temperature such that the moiety would be heated to its decomposition temperature several (at least three) millimeters from the walls of the reactor vessel. The specific temperature is selected based on internal pressure, composition and type of moiety, but generally is not greater than about 250 °C and is typically less than about 200 °C to ensure that the internal spaces of the reactor vessel are heated to at least 50 °C.

In any event, the reactor vessel, as well as the feeders, can be formed of any material which meets the requirements of temperature and pressure discussed above. Such materials include a metal, graphite, high density plastics nr the like. Most preferably the reactor vessel and related components are formed of a transparent material, such as quartz or other forms of glass, including high temperature glass commercially available as Pyrex^{®} materials.

Thus, in the process of the present invention, decomposable metal-containing moieties are fed into a reactor vessel where they are exposed to a source of energy sufficient to decompose the moieties. The decomposable moieties are fed into a closed-system reactor under vacuum or in the presence of an inert gas; similarly, the moieties are fed into a flow-through reactor where the flow is created by drawing a vacuum or flowing an inert gas through the flow-through reactor. The energy applied is sufficient to decompose the decomposable moiety in the reactor or as it as flowing through the reactor, and free the metal from the moiety which is deposited on a support or collected in a collector. Where heat is the energy used to decompose the decomposable moiety, temperatures no greater than about 500 °C, more preferably no greater than about 250 °C, and most preferably no greater than about 200°C, are required in a process requiring only minutes and not under extreme conditions of temperature and pressure. Indeed, the process of the present invention often requires less than about one minute and, in some embodiments, can require less than about 5 seconds.

In one embodiment of the inventive process, a single feeder feeds a single decomposable moiety into the reactor vessel. In another embodiment, however, a plurality of feeders each feede decomposable moieties into the reactor vessel. In this way, all feeders can feed the same decomposable moiety or different feeders can feed different decomposable moieties, such as additional metal carbonyls, so as to provide nano-scale particles containing different metals such as platinum-nickel combinations or nickel-iron combinations as desired, in proportions determined by the amount of the decomposable moiety fed into the reactor vessel. For instance, by feeding different decomposable moieties through different feeders, one can produce a nano-scale particle having a core of a first metal, with domains of a second or third, etc. metal coated thereon. Indeed, altering the decomposable moiety fed into the reactor vessel by each feeder can alter the nature and/or constitution of the nano-scale particles. In other words, if different proportions of metals making up the nano-scale particles, or different orientations of the metals making up the nano-scale particles is desired, altering the decomposable moiety fed into the reactor vessel by each feeder can produce such different proportions or different orientations.

Indeed, in the case of the flow-through reactor vessel, each of the feeders can be arrayed about the circumference of the conduit forming the reactor vessel at approximately the same location, or the feeders can be arrayed along the length of the conduit so as to feed decomposable moieties into the reactor vessel at different locations along the flow path of the conduit.

While it is anticipated that the inventive process and apparatus may also produce particles that are larger than nano-scale in size the larger particles can be separated through the use of the cyclonic separator or because of their differing deposition rates on a collector.

It is an object of the present invention to provide chain agglomerations of nano-scale metal particles.

This object and others, which will be apparent to the skilled artisan upon reading the following description, can be achieved by providing a process and apparatus for producing chain agglomerations of nano-scale metal particles, including providing a reactor vessel; feeding at least one decomposable moiety selected from the group of organometallic compounds, metal complexes, metal coordination compounds, and mixtures thereof into a reactor vessel; exposing the decomposable moiety within the reactor vessel to a source of energy sufficient to decompose the moiety; and deposit or collection. Preferably, the temperature within the reactor vessel Is no greater than about 250 °C. The pressure within the reactor vessel is preferably generally atmospheric, but pressures which vary between about 1.33 hPa (1 mm) to about 2666 hPa (2000 mm) can be employed.

The reactor vessel is advantageously formed of a material which is relatively transparent to the energy supplied by the source of energy, as compared to the decomposable moieties, such as where the source of energy is radiant heat. In fact, the support or collector has incorporated therein a resistance heater. A source of energy can be a heat lamp. Where the source of energy is radiant heat, the reactor vessel can be cooled, such as by a cooling medium like cooling coils or a cooling jacket disposed about the reactor vessel to preclude decomposition of the moiety and deposit of particles at the vessel walls.

The support can be the end use substrate, such as a component of an automotive catalytic converter or a fuel cell or electrolysis membrane or electrode. The support or collector can be positioned within the reactor vessel. However, the reactor vessel can be a flow-through reactor vessel comprising a conduit, and in such case the support or collector can be disposed either external to the reactor vessel or within the reactor vessel.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principles and operations of the invention.

Fig. 1 is a side plan view of an apparatus utilizing a "closed system" reactor vessel in accordance with the present invention.

Fig. 2 is a side plan view of an alternate embodiment of the apparatus of Fig. 1.

Fig. 3 is a side plan view of an apparatus utilizing a "flow-through" reactor vessel in accordance with the present invention.

Fig. 4 is an alternative embodiment of the apparatus of Fig. 3.

Fig. 5 is another alternative embodiment of the apparatus of Fig. 3, using a support external to the flow-through reactor vessel.

Fig. 6 is a photomicrograph of a chain agglomeration of nano-scale metal particles in accordance with the present invention.

### Best Mode For Carrying Out The Invention

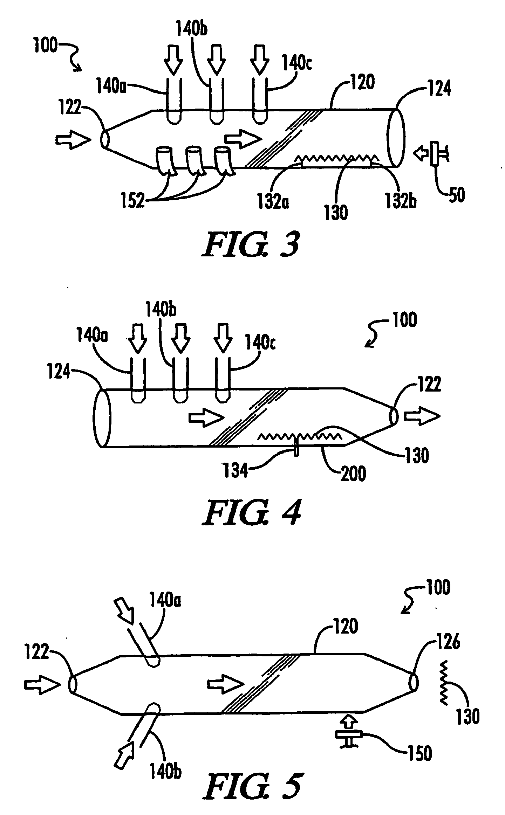

Referring now to the drawings, an apparatus in which the inventive process can be practiced is generally designated by the numeral 10 or 100. In Figs. 1 and 2 apparatus 10 is a closed system comprising closed reactor vessel 20 whereas in Figs. 3-6 apparatus 100 is a flow-through reaction apparatus comprising flow-through reactor vessel 120.

It will be noted that Figs. 1-5 show apparatus 10, 100 in a certain orientation. However, it will be recognized that other orientations are equally applicable for apparatus 10, 100. For instance, when under vacuum, reactor vessel 20 can be in any orientation for effectiveness. Likewise, in flow-through reactor vessel 120, the flow of inert carrier gas and decomposable moieties or the flow of decomposable moieties as drawn by a vacuum in Figs. 3-5 can be in any particular direction or orientation and still be effective. In addition, the terms "up" "down" "right" and "left" as used herein refer to the orientation of apparatus 10, 100 shown in Figs. 1-5.

Referring now to Figs. 1 and 2, as discussed above apparatus 10 comprises a closed-system reactor vessel 20 formed of any material suitable for the purpose and capable of withstanding the exigent conditions for the reaction to proceed inside including conditions of temperature and/or pressure. Reactor vessel 20 includes an access port 22 for providing an Inert gas such as argon to fill the internal spaces of reactor vessel 20, the inert gas being provided by a conventional pump or the like (not shown). Similarly, as illustrated in Fig. 2, port 22 can be used to provide a vacuum in the internal spaces of reactor vessel 20 by using a vacuum pump or similar device (not shown). In order for the reaction to successfully proceed under vacuum in reactor vessel 20, it is not necessary that an extreme vacuum condition be created. Rather negative pressures no less than about 1.33 hPa (1 mm), preferably no less than about333 hPa (250 mm), are all that are required.

Reactor vessel 20 has disposed therein a support 30 which can be attached directly to reactor vessel 20 or can be positioned on legs 32a and 32b within reactor vessel 20. Reactor vessel 20 also comprises a sealable opening shown at 24, in order to permit reactor vessel 20 to be opened after the reaction is completed to remove support 30 or remove chain agglomerations of nano-scale metal particles deposited on support 30. Closure 24 can be a threaded closure or a pressure closure or other types of closing systems, provided they are sufficiently air tight to maintain inert gas or the desired level of vacuum within reactor vessel 20.

Apparatus 10 further comprises at least one feeder 40, and preferably a plurality of feeders 40a and 40b, for feeding reactants, more specifically the decomposable moiety, into reactor vessel 20. As illustrated in Figs. 1 and 2, two feeders 40a and 40b are provided, although it is anticipated that other feeders can be employed depending on the nature of the decomposable moiety/moieties introduced into vessel 20 and/or end product desired. Feeders 40a and 40b can be fed by suitable pumping apparatus for the decomposable moiety such as venturi pumps or the like (not shown).

As illustrated in Fig. 1, apparatus 10 further comprises a source of energy capable of causing decomposition of the decomposable moiety. In the embodiment illustrated in Fig. 1, the source of energy comprises a source of heat, such as a heat lamp 50, although other radiant heat sources can also be employed. In addition, as discussed above, the source of energy can be a source of electromagnetic energy, such as infrared, visible or ultraviolet light, microwave energy, radio waves or other forme of sonic energy, as would be familiar to the skilled artisan, provided the energy employed is capable of causing decomposition of the decomposable moiety.

In one embodiment, the source of energy can provide energy that is preferentially couple-able to support 30 so as to facilitate deposit on support 30. However, where a source of energy such as heat is employed, which would also heat reactor vessel 20, it may be desirable to cool reactor vessel 20 using, e.g., cooling tubes 52 (shown partially broken away) such that reactor vessel 20 is maintained at a temperature below the decomposition temperature of the decomposable moiety. In this way, the decomposable moiety does not decompose at the surfaces of reactor vessel 20 but rather on support 30.

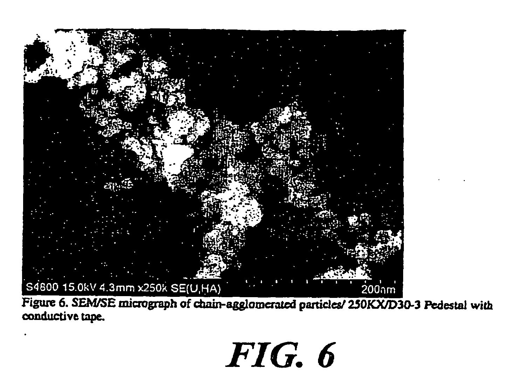

In an alternative embodiment illustrated in Fig. 2, support 30 itself comprises the source of energy for decomposition of the decomposable moiety. For instance, a resistance heater powered by connection 34 can be incorporated into or comprise support 30 such that only support 30 is at the temperature of decomposition of the decomposable moiety, such that the decomposable moiety decomposes on support 30 and thus produces the chain agglomeration of nano-scale metal particles shown in Fig. 6. Likewise, other forms of energy for decomposition of the decomposable moiety can be incorporated into support 30.

Support 30 can be formed of any material sufficient to have deposit thereon of nano-scale metal particles produced by decomposition of the decomposable moiety. In a preferred embodiment, support 30 comprises the end use substrate on which nano-scale metal particles are intended to be employed, such as the aluminum oxide or other components of an automotive catalytic converter, or the electrode or membrane of a fuel cell or electrolysis cell. Indeed, since the source of energy is itself embedded in or associated with support 30, selective deposition can be obtained to increase the efficiency of the catalytic reaction and reduce inefficiencies or wasted catalytic metal placement. In other words, the source of energy can be embedded within support 30 in the desired pattern for deposition of catalyst metal, such that deposition of the catalyst nano-scale metal can be placed where catalytic reaction is desired.

In another embodiment of the invention, as illustrated in Figs. 3-5, apparatus 100 comprises a flow-through reactor vessel 120 which includes a port, denoted 122, for either providing an inert gas or drawing a vacuum from reactor vessel 120 to thus create flow for the decomposable moieties to be reacted. In addition, apparatus 100 includes feeders 140a, 140b, 140c, which can be disposed about the circumference of reactor vessel 20, as shown in Fig. 3, or, in the alternative, sequentially along the length of reactor vessel 120, as shown In Fig. 4.

Apparatus 100 also comprises support 130. Support 130 can be positioned on legs 132a and 132b or, in the event a source of energy is incorporated into support 130, as a resistance heater, the control and wiring for the source of energy in support 130 can be provided through line 134.

As illustrated in Figs. 3 and 4, when support 130 is disposed within flow-through reactor vessel 120, a port 124 is also provided for removal of support 130 or the chain agglomerations of nano-scale metal particles deposited thereon. In addition, port 124 should be structured such that it permits the inert gas fed through port 122 and flowing through reactor vessel 120 to egress reactor vessel 120 (as shown in Fig. 3). Port 124 can be sealed in the same manner as closure 24 discussed above with respect to closed system apparatus 10. In other words, port 124 can be sealed by a threaded closure or pressure closure or other types of closing structures as would be familiar to the skilled artisan.

As illustrated in Fig. 5, however, support 130 can be disposed external to reactor vessel 120 in flow-through reactor apparatus 100. Support 130 is a structural support 130 as illustrated in Fig. 5. In this embodiment, flow-through reactor vessel 120 comprises a port 124 through which decomposable moieties are impinged on support 130. In addition, during the impingement of the decomposable moieties on support 130, either port 126 or support 130 can be moved in order to provide for an impingement on certain specific areas of support 130. This is especially useful if support 130 comprises the end use substrate such as the component of a catalytic converter or electrode for fuel cells. Thus, the chain agglomerations of nano-scale metal particles are only produced and deposited where desired on the wire and efficiency and decrease of wasted catalytic metal is facilitated.

As discussed above, reactor vessel 20, 120 can be formed of any suitable material for use in the reaction provided it can withstand the temperature and/or pressure at which decomposition of the decomposable moiety occurs. For instance, the reactor vessel should be able to withstand temperatures up to about 250°C where heat is the energy used to decompose the decomposable moiety. Although many materials are anticipated as being suitable, including metals, plastics, ceramics and materials such as graphite, preferably reactor vessels 20, 120 are formed of a transparent material to provide for observation of the reaction as it is proceeding. Thus, reactor vessel 20, 120 is preferably formed of quartz or a glass such as Pyrex® brand material available from Corning, Inc. of Corning, New York.

In the practice of the invention, either a flow of an inert gas such as argon or nitrogen or a vacuum is drawn on reactor vessel 20, 120 and a stream of decomposable moieties is fed into reactor vessel 20, 120 via feeders 40a, 40b, 140a, 140b, 140c. The decomposable moieties can be any metal containing moiety such as an organometallic compound, a complex or a coordination compound, which can be decomposed by energy at the desired decomposition conditions of pressure and temperature. For instance, if heat is the source of energy, the decomposable moiety should be subject to temperatures no greater than 300 °C, more preferably no greater then 200 °C. Other materials, such as oxygen, can also be fed into reactor 20, 120 to partially oxidize the nano-scale metal particles, to modify the surface of the nano-scale particles. Contrariwise, a reducing material such as hydrogen can be fed into reactor 20, 120 to reduce the potential for oxidation of the decomposable moiety.

The energy for decomposition of the decomposable moiety is then provided to the decomposable moiety within reactor vessel 20, 120 by, for instance, heat lamp 50, 150. If desired, reactor vessel 120 can also be cooled by cooling coils 52, 152 to avoid deposit on the surface of reactor vessel 20, 120 as opposed to support 30, 130.

As discussed, it is often desirable to produce chain agglomerations of nano-scale metal particles, when the end use application is catalysis or the like. A representative chain agglomeration is shown in the photomicrograph of Fig. 6; the chain agglomeration of Fig. 6 is an agglomeration of nano-scale nickel and iron particles, at a ratio of nickel to iron of about 6.5:1, shown 250,000 times its actual size. As is apparent, the chain agglomeration of Fig. 6 has an aspect ratio of at least about 1000:1.

To produce a chain agglomeration such as the one shown in Fig. 6, a vacuum is drawn on reactor vessel 20, 120 and a stream of decomposable moieties, such as nickel and iron carbonyls, at a partial pressure of less than 667 hPa (500 mm), is fed into reactor vessel 20, 120 via feeders 40a, 40b, 140a, 140b, 140c. An inert gas such as nitrogen can also be fed into reactor 20, 120, at a partial pressure of less than about 933 hPa (700 mm). Moiety pressures of less than about 107 hPa (80 mm) are all that is required. The process time for production of chain agglomerations such that shown in Fig. 6 is less than about 3 seconds.

The energy for decomposition is heat support 30, 130, such as a resistively heated wire. Chain agglomerations of nano-scale metal particles produced by the decomposition of the decomposable moieties are then deposited on support 30, 130, and can be collected, for storage and/or use.

Thus the present invention provides a facile means for producing chain agglomerations of nano-scale metal particles which permits selective placement of the particles, direct deposit of the particles on the end use substrate, without the need for extremes of temperature and pressure required by prior art processes.

The invention thus being described, it will be apparent that it can be varied in many ways. Such variations are not to be regarded as a departure from the scope of the present invention and all such modifications as would be apparent to one skilled in the art are intended to be included within the scope of the following claims.

## Claims

1. A process for producing chain agglomerations of nano-scale metal particles having an average diameter of no greater than 1,000 nm, comprising:
a) feeding at least one decomposable moiety selected from the group consisting of organometallic compounds, metal complexes, metal coordination compounds and mixtures thereof into a reactor vessel (20, 120);
b) exposing the decomposable moiety to heat from a resistance heater (50, 150) being a wire sufficient to decompose the moiety and produce nano-scale metal particles; and
c) depositing or collecting the chain agglomerations of nano-scale metal particles, which are formed on the wire.

2. The process of claim 1, wherein the temperature within the reactor vessel (20, 120) is no greater than 250 °C.

3. The process of anyone of the preceding claims, wherein a vacuum is maintained within the reactor vessel (20, 120) of no less than 1.33 hPa (1 mm).

4. The process of anyone of the preceding claims, wherein a support (30, 130) or collector is positioned within the reactor vessel (20, 120).

5. The process of anyone of the preceding claims, wherein oxygen is fed into the reactor vessel (20, 120) to partially oxidize the nano-scale metal particles produced by decomposition of the decomposable moiety.

6. The process of anyone of the preceding claims, wherein a reducing material is fed into the reactor vessel (20, 120) to reduce the potential for oxidation of the decomposable moiety.

7. The process of anyone of the preceding claims, wherein the chain agglomerations have an aspect ratio of at least 700:1.

8. The process of anyone of the preceding claims, wherein the pressure of the moiety is no greater than 106.7 hPa (80 mm).

9. The process of anyone of the preceding claims, which further comprises feeding an inert gas into the reactor vessel (20, 120) at a partial pressure of less than 933.3 hPa (700 mm).

10. An apparatus for producing chain agglomerations of nano-scale metal particles having an average diameter of no greater than 1,000 nm, comprising:
a) a reactor vessel (20, 120);
b) at least one feeder (40a, 40b, 140a, 140b, 140c) in operational connection with the reactor vessel (20, 120) for feeding into the reactor vessel (20, 120) a decomposable moiety selected from the group of organometallic compounds, metal complexes, metal coordination compounds, and mixtures thereof;
c) a support (30, 130) or collector having a wire resistance heater incorporated therein, operatively connected to the reactor vessel (20, 120);
d) a source of energy (50, 150) being the wire resistance heater capable of decomposing the decomposable moieties,
the wire resistance heater being disposed within the flow of decomposable moieties such that the decomposable moieties decompose and chain agglomerations of nano-scale metal particles are formed, and deposited on the wire.

11. The apparatus of claim 10, wherein the reactor vessel (20, 120) is formed of a material which is transparent to the energy supplied by the source of energy (50, 150) employed to decompose the decomposable moiety.

12. The apparatus of claim 10 or 11, wherein a cooling medium is disposed about the reactor vessel (20, 120) to cool the vessel.

13. The apparatus of any one of the claims 10 to 12, wherein the support (30, 130) or collector is positioned within the reactor vessel (20, 120).

14. The apparatus of any one of the claims 10 to 13, wherein the reactor vessel (20, 120) is a flow through reactor vessel (120) comprising a conduit.

15. The apparatus of any one of the claims 10 to 14, wherein the support (130) or collector is disposed external to the reactor vessel (120).

## Patentansprüche

1. Ein Verfahren zur Herstellung von Ketten-Agglomerationen von Nanobereich-Metallteilchen mit einem mittleren Durchmesser nicht größer als 1.000 nm, welches umfasst:
a) Zuführen von wenigstens einer zersetzbaren Einheit, welche ausgewählt wird aus der Gruppe, die Organometallverbindungen, Metallkomplexe, Metallkoordinationsverbindungen und Mischungen hiervon umfasst, in einen Reaktorbehälter (20, 120),
b) Exponieren der zersetzbaren Einheit gegenüber Wärme von einer Widerstandsheizung (50, 150), die einen Draht umfasst, die ausreicht, um die Einheit zu zersetzen und Nanobereich-Katalysator-Metallteilchen herzustellen; und
c) Abscheiden oder Sammeln der Ketten-Agglomerationen von Nanobereich-Metallteilchen, die an dem Draht gebildet werden.

2. Das Verfahren von Anspruch 1, wobei die Temperatur innerhalb des Reaktorbehälters (20, 120) nicht höher als 250 °C ist.

3. Das Verfahren nach irgendeinem der vorhergehenden Ansprüche, wobei ein Vakuum von nicht weniger als 1,33 hPa (1 mm) innerhalb des Reaktorbehälters (20, 120) beibehalten wird.

4. Das Verfahren nach irgendeinem der vorhergehenden Ansprüche, wobei eine Aufnahme (30, 130) oder ein Sammler innerhalb des Reaktorbehälters (20, 120) positioniert ist.

5. Das Verfahren nach irgendeinem der vorhergehenden Ansprüche, wobei Sauerstoff in den Reaktorbehälter (20, 120) zugeführt wird, um die Nanobereich-Metallteilchen, die durch Zersetzung der zersetzbaren Einheit hergestellt werden, partiell zu oxidieren.

6. Das Verfahren nach irgendeinem der vorhergehenden Ansprüche, wobei ein Reduktionsmittel in den Reaktorbehälter (20, 120) zugeführt wird, um die Wahrscheinlichkeit der Oxidation der zersetzbaren Einheit zu verringern.

7. Das Verfahren nach irgendeinem der vorhergehenden Ansprüche, wobei die Ketten-Agglomerationen ein Aspektverhältnis von wenigstens 700:1 aufweisen.

8. Das Verfahren nach irgendeinem der vorhergehenden Ansprüche, wobei der Druck der Einheit nicht größer als 106,6 hPa (80 mm) ist.

9. Das Verfahren nach irgendeinem der vorhergehenden Ansprüche, welches weiterhin das Zuführen eines Inertgases in den Reaktorbehälter (20, 120) bei einem Partialdruck von weniger als 933,2 hPa (700 mm) umfasst.

10. Eine Apparatur zur Herstellung von Ketten-Agglomerationen von Nanobereich-Metallteilchen mit einem mittleren Durchmesser nicht größer als 1.000 nm, welche umfasst:
a) einen Reaktorbehälter (20, 120);
b) wenigstens eine Zuführvorrichtung (40a, 40b, 140a, 140b, 140c) in Wirkverbindung mit dem Reaktorbehälter (20, 120), um eine zersetzbare Einheit, welche ausgewählt wird aus der Gruppe, die Organometallverbindungen, Metallkomplexe, Metallkoordinationsverbindungen und Mischungen hiervon, in den Reaktorbehälter (20, 120) zuzuführen;
c) eine Aufnahme (30, 130) oder einen Sammler mit einer darin eingebauten Draht-Widerstandsheizung, die mit dem Reaktorbehälter (20, 120) wirkend verbunden sind;
d) eine Energiequelle, welche die zur Zersetzung der zersetzbaren Einheiten geeignete Draht- Widerstandsheizung ist, wobei
die Draht-Widerstandsheizung in der Strömung der zersetzbaren Einheiten derart angeordnet ist, dass die zersetzbaren Einheiten zersetzt werden und Ketten-Agglomerationen von Nanobereich-Metallteilchen gebildet und an dem Draht abgeschieden werden.

11. Die Apparatur nach Anspruch 10, wobei der Reaktorbehälter (20, 120) aus einem Material geformt ist, das transparent für die Energie ist, die von der Energiequelle (50, 150) geliefert und angewendet wird, um die zersetzbare Einheit zu zersetzen.

12. Die Apparatur nach Anspruch 10 oder 11, wobei ein Kühlmedium an dem Reaktorbehälter (20, 120) angeordnet ist, um den Behälter zu kühlen.

13. Die Apparatur nach irgendeinem der Ansprüche 10 bis 12, wobei die Aufnahme (30, 130) oder der Sammler innerhalb des Reaktorbehälters (20, 120) angeordnet ist.

14. Die Apparatur nach irgendeinem der Ansprüche 10 bis 13, wobei der Reaktorbehälter (20, 120) ein Durchströmungsreaktorbehälter (120) mit einem Rohr ist.

15. Die Apparatur nach irgendeinem der Ansprüche 10 bis 14, wobei die Aufnahme (30, 130) oder der Sammler außerhalb des Reaktorbehälters (20, 120) angeordnet ist.

## Revendications

1. Processus pour produire des agglomérations en chaînes de nanoparticules métalliques ayant un diamètre moyen qui n'est pas supérieur à 1000 nm comprenant :
a) l'alimentation d'au moins une moitié décomposable sélectionnée dans le groupe comprenant les composants organométalliques, les complexes métalliques, les composés métalliques de coordination et des mélanges de ceux-ci dans une cuve de réacteur (20, 120) ;
b) l'exposition de la moitié décomposable à la chaleur d'un chauffage par résistance (50, 150) étant un fil suffisant pour décomposer la moitié et produire des nanoparticules métalliques et
c) le dépôt ou la collecte des agglomérations en chaînes de nanoparticules métalliques qui sont formées sur le fil.

2. Processus selon la revendication 1 dans lequel la température à l'intérieur de la cuve de réacteur (20, 120) n'est pas supérieure à 250 °C.

3. Processus selon l'une quelconque des revendications précédentes dans lequel un vide qui n'est pas inférieur à 1,33 hPa (1 mm) est maintenu à l'intérieur de la cuve de réacteur (20, 120).

4. Processus selon l'une quelconque des revendications précédentes dans lequel un support (30, 130) ou collecteur est positionné à l'intérieur de la cuve de réacteur (20, 120).

5. Processus selon l'une quelconque des revendications précédentes dans lequel de l'oxygène est alimenté dans la cuve de réacteur (20, 120) pour oxyder partiellement les nanoparticules métalliques produites par décomposition de la moitié décomposable.

6. Processus selon l'une quelconque des revendications précédentes dans lequel un matériau réducteur est alimenté dans la cuve de réacteur (20, 120) pour réduire le potentiel d'oxydation de la moitié décomposable.

7. Processus selon l'une quelconque des revendications précédentes dans lequel les agglomérations en chaînes ont un rapport d'aspect d'au moins 700:1.

8. Processus selon l'une quelconque des revendications précédentes dans lequel la pression de la moitié n'est pas supérieure à 106,7 hPa (80 mm).

9. Processus selon l'une quelconque des revendications précédentes qui comprend de plus l'alimentation d'un gaz inerte dans la cuve de réacteur (20, 120) à une pression partielle qui est inférieure à 933,3 hPa (700 mm).

10. Appareil pour produire des agglomérations en chaînes de nanoparticules métalliques ayant un diamètre moyen qui n'est pas supérieur à 1000 nm comprenant :
a) une cuve de réacteur (20, 120) ;
b) au moins un alimentateur (40a, 40b, 140a, 140b, 140c) en relation opérationnelle avec la cuve de réacteur (20, 120) pour alimenter dans la cuve de réacteur (20, 120) une moitié décomposable sélectionnée dans le groupe comprenant les composants organométalliques, les complexes métalliques, les composés métalliques de coordination et des mélanges de ceux-ci ;
c) un support (30, 130) ou collecteur ayant un chauffage à résistance à fil qui lui est incorporé, en relation opérationnelle avec la cuve de réacteur (20, 120) ;
d) une source d'énergie (50, 150) étant le chauffage à résistance à fil capable de décomposer les moitiés décomposables,
le chauffage à résistance à fil étant disposé dans le flux de moitiés décomposables de telle manière que les moitiés décomposables se décomposent et que des agglomérations en chaînes de nanoparticules métalliques se forment et se déposent sur le fil.

11. Appareil selon la revendication 10 dans lequel la cuve de réacteur (20, 120) est formée en un matériau qui est transparent à l'énergie fournie par la source d'énergie (50, 150) employée pour décomposer la moitié décomposable.

12. Appareil selon la revendication 10 ou 11 dans lequel un agent refroidisseur est disposé à côté de la cuve de réacteur (20, 120) pour refroidir la cuve.

13. Appareil selon l'une quelconque des revendications 10 à 12 dans lequel le support (30, 130) ou le collecteur est positionné à l'intérieur de la cuve de réacteur (20, 120).

14. Appareil selon l'une quelconque des revendications 10 à 13 dans lequel la cuve de réacteur (20, 120) est une cuve de réacteur d'écoulement (120) comprenant un conduit.

15. Appareil selon l'une quelconque des revendications 10 à 14 dans lequel le support (130) ou collecteur est disposé à l'extérieur de la cuve de réacteur (120).
